# EUROPÄISCHE PATENTANMELDUNG

(11) **EP 2 738 646 A1**
(43) Veröffentlichungstag der Anmeldung: **04.06.2014**
(21) Anmeldenummer: 12075135.9
(22) Anmeldetag: 29.11.2012
(51) Int. Cl.: G06F 3/01, G06F 3/041

(54) **Benutzerschnittstelle für ein elektronisches Gerät**

(71) Anmelder: Deutsche Telekom AG, 53113 Bonn (DE)
(72) Erfinder: Hildebrandt, Eric, 60320 Frankfurt am Main (DE)
(74) Vertreter: Brandt & Nern Patentanwälte

(57) **Zusammenfassung**

Die vorgestellte Benutzerschnittstelle besteht aus einem eine berührungsempfindliche Oberfläche (4) aufweisenden Display (3) zur Aus- und Eingabe und einem für Eingaben in das Gerät durch einen Benutzer von Hand mit der berührungsempfindlichen Oberfläche (4) in Kontakt zu bringen oder/und an dieser entlangzubewegenden Eingabemittel (1). Das Eingabemittel (1) weist mindestens einen Permanentmagneten (2) auf. An oder in dem auch allgemein für Ausgaben des elektronischen Geräts vorgesehenen Display (3) ist unterhalb der berührungsempfindlichen Oberfläche (4) eine sich parallel zu der Oberfläche (4), über deren berührungsempfindlichen Bereich erstreckende Interaktionsanordnung ausgebildet. Mit der vorzugsweise in Form eines Arrays von Spulen (5, 5') ausgebildeten Interaktionsanordnung tritt das Magnetfeld des mindestens einen Permanentmagneten (2) des Eingabemittels (1) bei einer Eingabe derart in eine magnetische Wechselwirkung, dass die beim Entlangführen des Eingabemittels (1) an der berührungsempfindlichen Oberfläche (4) vom Benutzer empfundene Reibung zumindest partiell gegenüber nicht mit dem vorgenannten Interaktionsmittel ausgestatteten, aber ansonsten gleich ausgebildeten Displays erhöht ist.

## Beschreibung

Die Erfindung betrifft eine Benutzerschnittstelle für ein mit einer Verarbeitungseinheit ausgestattetes elektronisches Gerät, also insbesondere für ein computerbasiertes Endgerät. Sie bezieht sich insbesondere auf eine spezielle Ausbildung einer derartigen Benutzerschnittstelle im Hinblick auf deren Funktion als Eingabeeinrichtung zur Bedienung eines mit ihr ausgestatteten Geräts, durch welche einem Benutzer bei Eingaben in das Gerät ein gewisses haptisches Feedback vermittelt wird. Die Art des Feedbacks ist hierbei abhängig von der jeweiligen, unter mehreren Möglichkeiten auswählbaren konkreten Ausgestaltung der Benutzerschnittstelle. Sie ist ferner entsprechend dazu vorgesehener Ausbildungsformen der Erfindung auf die Art einer jeweiligen Eingabe abstimmbar. Insbesondere ist die vorgeschlagene Lösung aber darauf ausgerichtet, dem Nutzer bei handschriftlichen Eingaben in Form von Text, Zeichnungen und dergleichen ein haptisches Feedback zu vermitteln, welches an entsprechende Wahrnehmungen beim Schreiben oder Zeichnen auf Papier angenähert ist.

In jüngerer Zeit gelangen mit der zunehmenden Verbreitung von Tablet-PCs, Smartphones und ähnlichen Geräten in zunehmendem Maße berührungsempfindliche Displays (Touchscreens) zum Einsatz, welche den Benutzern entsprechender Geräte deren Bedienung und Eingaben mittels der Finger ermöglichen. Diese Art der Bedienung beziehungsweise des Tätigens von Eingaben in Endgeräten mit berührungsempfindlichen Displays ist sehr intuitiv und trifft daher auf großen Zuspruch der Benutzer. Allerdings unterliegt die Eingabe an Touchscreens unter Zuhilfenahme der Finger auch gewissen Beschränkungen. Diese werden insbesondere dann deutlich, wenn beispielsweise graphische Eingaben zur Erstellung von Skizzen oder Zeichnungen eine feinere Kontrolle der Eingabeeinrichtung beziehungsweise des Eingabemittels erfordern. Es sind daher auch Geräte entwickelt worden, welche an ebenfalls berührungsempfindlichen Displays Eingaben mittels eines Stiftes, eines so genannten Stylus, ermöglichen. Dennoch ist auch hierbei die erzielbare Genauigkeit der Eingabe für manche Anwendungsfälle eventuell zu gering, was insbesondere durch die häufig zum Schutz des Displays verhältnismäßig stumpfe Spitze entsprechender Eingabestifte bedingt ist.

Für Anwendungen mit sehr hohen Genauigkeitsanforderungen, das heißt dem Erfordernis einer sehr feinen Kontrolle über die Eingabeeinrichtung, stellt die Verwendung von gegenüber dem Display der Endgeräte separaten Grafiktabletts eine Alternative dar. Deren Bedienung wird jedoch als weniger intuitiv empfunden als insbesondere die Fingereingabe am Display. Dies ist insbesondere darauf zurückzuführen, dass die Koordination zwischen der Eingabefläche des Grafiktabletts und dem Bildschirm zumindest für den ungeübten Nutzer verhältnismäßig schwierig ist.

Abgesehen von den häufig stumpfen Spitzen der für eine unmittelbare Eingabe am berührungsempfindlichen Display verwendeten Eingabestifte besteht ein weiteres grundsätzliches Problem darin, dass die glatte Oberfläche des Displays beim Zeichnen oder Schreiben durch den Nutzer gegenüber der Verwendung von Stift und Papier als ungewohnt und unangenehm empfunden wird. Grund ist das Fehlen der von herkömmlichen Stiften her gewohnten Reibung auf Papier. Zudem gleitet häufig die Hand selbst nicht gut über die Glasoberfläche entsprechender Displays, was unter anderem durch die Feuchtigkeit der Hautoberfläche begründet ist. Prinzipbedingt lassen sich jedoch Bildschirmoberflächen beziehungsweise die Oberflächen berührungsempfindlicher Displays nicht aufrauen, da sich hierdurch die optischen Eigenschaften für die Wiedergabe der an ihnen auszugebenden Informationen verschlechtern würden.

Aufgabe der Erfindung ist es, eine Benutzerschnittstelle bereitzustellen, welche Eingaben an einem elektronischen Gerät ermöglicht und dabei ihrem Benutzer beim Zeichnen oder Schreiben von Hand ein adäquates, an die Verwendung von Stift und Papier erinnerndes Feedback vermittelt. Gemäß entsprechenden Ausgestaltungen soll es die bereitzustellende Lösung auch ermöglichen, den Benutzer bei der Eingabe, in Anpassung an den jeweiligen Anwendungsfall, in unterstützender Weise haptisch zu führen.

Die Aufgabe wird durch eine Benutzerschnittstelle mit den Merkmalen des Patentanspruchs 1 gelöst. Vorteilhafte Aus- beziehungsweise Weiterbildungen der Erfindung sind durch die Unteransprüche gegeben.

Die zur Lösung der Aufgabe vorgeschlagene Benutzerschnittstelle für elektronische Geräte, welche mit einer Verarbeitungseinheit ausgestattet, also mehr oder weniger computerbasiert sind, besteht aus einem eine berührungsempfindliche Oberfläche aufweisenden, zur Aus- und Eingabe dienenden Display und einem durch einen Nutzer von Hand zu bewegenden Eingabemittel. Sie ist, wie grundsätzlich aus dem Stand der Technik bekannt, so gestaltet, dass das Eingabemittel für eine Eingabe mit der berührungsempfindlichen Displayoberfläche in Kontakt zu bringen oder/und an dieser entlangzubewegen ist. Das vorgenannte Display fungiert mithin sowohl zur Ausgabe von Informationen und/oder von visuellen medialen Inhalten als auch zur Entgegennahme von einem Benutzer mithilfe des Eingabemittels gemachter Eingaben. In Hinblick auf seine Ausgabefunktion sei dabei darauf hingewiesen, dass im Zusammenhang mit der erfindungsgemäßen Benutzerschnittstelle von einem Display ausgegangen wird, welches nicht lediglich dazu dient, die durch einen Benutzer gemachten Eingaben zu visualisieren, sondern allgemein zur Ausgabe durch das mit der Benutzerschnittstelle ausgestattete elektronische Gerät bereitgestellter Informationen und Inhalte.

Erfindungsgemäß weist das bereits mehrfach angesprochene, in seinen unterschiedlichen möglichen Ausprägungen nachfolgend noch detaillierter darzustellende Eingabemittel mindestens einen Permanentmagneten auf. Gleichzeitig ist in dem Display unterhalb der berührungsempfindlichen Oberfläche sowie parallel zu dieser eine hinsichtlich möglicher Ausbildungsformen ebenfalls noch näher zu erläuternde Interaktionsanordnung ausgebildet. Die Interaktionsanordnung, welche sich hinsichtlich ihrer Ausdehnung über den (im Wesentlichen gesamten) berührungsempfindlichen Bereich, aber eben aus der Sicht des Benutzer unterhalb der berührungsempfindlichen Oberfläche erstreckt, ist in jedem Falle so gestaltet, dass das Magnetfeld des mindestens einen Permanentmagneten des Eingabemittels während einer mittels diesem vorgenommenen Eingabe (Eingabe = In-Kontakt-Bringen des Eingabemittels mit der berührungsempfindlichen Oberfläche des Displays oder Entlangbewegen des Eingabemittels an dieser Oberfläche) in eine magnetische Wechselwirkung mit der besagten Interaktionsanordnung tritt. Die Gestaltung ist dabei derart, dass die vom Benutzer beim Entlangführen des Eingabemittels an der berührungsempfindlichen Displayoberfläche empfundene Reibung zumindest partiell erhöht ist. Die Erhöhung der empfundenen Reibung beziehungsweise des empfundenen Reibungswiderstandes bezieht sich dabei auf einen Vergleich mit den Gegebenheiten beim Entlangführen desselben Eingabemittels an einem nicht mit der erfindungsgemäß vorgesehenen Interaktionsanordnung ausgestatten, aber gegebenenfalls ansonsten im Wesentlichen in gleicher Weise ausgebildeten Display. Bei einem insoweit nur hypothetisch für den Vergleich hinsichtlich des empfundenen Reibungswiderstandes herangezogenen Display könnte es sich aber auch ohne das Vorhandensein der erfindungsgemäß vorgesehenen Interaktionsanordnung um ein berührungsempfindliches, beispielsweise nach dem Prinzip des kapazitiven Displays arbeitendes Display handeln. In diesem Zusammenhang soll daher ausdrücklich darauf hingewiesen werden, dass von der Erfindung sowohl Benutzerschnittstellen umfasst sind, bei denen die Interaktionsanordnung des als Bestandteil der Benutzerstelle ausgebildeten Displays mit bekannten Technologien zur Realisierung einer Berührungsempfindlichkeit kombiniert ist, als auch solche, bei denen die Berührungsempfindlichkeit des Displays erst durch das Vorhandensein einer (dann allerdings - wie nachfolgend noch zu erläutern - in bestimmter Weise ausgebildeten) Interaktionsanordnung gegeben ist. Entscheidend ist es insoweit, dass die Interaktionsanordnung des Display in ihrem Zusammenwirken mit dem Eingabemittel einem Benutzer der erfindungsgemäßen Benutzerschnittstelle beim Entlangbewegen des Eingabemittels an der berührungsempfindlichen Displayoberfläche ein haptisches Feedback vermittelt. Zusätzlich kann - muss aber nicht - die Interaktionsanordnung bei geeigneter Ausbildung auch zur Bestimmung der jeweiligen aktuellen Position des mit ihr in Kontakt gebrachten Eingabemittels genutzt werden.

Für die Realisierung der bereits mehrfach erwähnten Interaktionsanordnung sind gemäß der Erfindung zwei grundsätzlich mögliche Ausbildungsformen vorgesehen. Entsprechend einer ersten Ausbildungsform handelt es sich dabei um eine stark vereinfachte (bezüglich des praktischen Einsatzes auch eingeschränkte) passive Lösungsvariante. Diese passive Lösungsvariante ist dadurch gegeben, dass die Interaktionsanordnung in Form einer ferromagnetischen Schicht ausgebildet ist, welche dem zur Benutzerschnittstelle gehörenden Display selbst keine Berührungsempfindlichkeit verleiht, sondern beim Entlangbewegen des Eingabemittels an der Displayoberfläche lediglich ein Feedback in Form einer Erhöhung des vom Benutzer empfundenen Reibungswiderstandes bewirkt. Dem Begriff "Schicht" liegt in diesem Zusammenhang ein weit gefasstes Verständnis zugrunde, welches über die Möglichkeit der Erzeugung einer solchen "Schicht" mittels einer Beschichtungstechnologie, wie zum Beispiel durch Aufdampfen, hinausgeht. Es handelt sich vielmehr gewissermaßen um eine parallel zu der berührungsempfindlichen Oberfläche des Displays angeordnete Ebene im Sinne einer flächenartigen, das heißt im Wesentlichen zweidimensionalen Struktur, die jedoch beispielsweise aufgrund einer entsprechenden Profilierung bezüglich ihrer großen (zur Displayoberfläche parallelen) Flächenbegrenzungen nicht vollständig plan sein muss. Eine solche Schicht kann demnach zum Beispiel durch eine entsprechende Beschichtung der Rückseite eines berührungsempfindlichen Displays oder aber durch Anordnung einer ferromagnetischen (gegebenenfalls nicht vollständig planen) Folie oder Platte innerhalb des Displays oder an dessen Rückseite realisiert werden. Auch die Möglichkeit einer mehrlagigen Ausbildung, mit insbesondere einer gezielten Strukturierung oder mit einer bezüglich des Materials lokal variabel ausgebildeten, der Displayoberfläche zugewandten Decklage, soll insoweit von dem Begriff umfasst sein. Gemäß möglicher Weiterbildungen dieser ersten grundsätzlichen Lösungsvariante, zu welchen später noch nähere Ausführungen gegeben werden sollen, kann die dabei vorgesehene ferromagnetische Schicht zur Unterstützung des Nutzers in bestimmten Eingabesituationen in geeigneter Weise strukturiert sein. Die Strukturierung kann dabei für eine gerichtete Führung des an der berührungsempfindlichen Oberfläche entlangbewegten Eingabemittels mehr oder weniger regelmäßig sein, das heißt festen Vorgaben beziehungsweise Strukturmustern folgen oder auch unregelmäßig unter Erzeugung einer leichten Inhomogenität bezüglich der Wechselwirkung mit dem Magnetfeld des Permanentmagneten des Eingabemittels gestaltet sein.

Die zweite grundsätzliche Ausbildungsform der Erfindung besteht darin, die angesprochene Interaktionsanordnung in Form eines Arrays aus elektrischen Spulen zu realisieren. Hierbei sind die in einem Array angeordneten Spulen bezüglich der berührungsempfindlichen Displayoberfläche so angeordnet, dass eine von ihren Spulenwindungen umgebene Achse orthogonal zu der Displayoberfläche ausgebildet ist. Vorzugsweise handelt es sich bei den Spulen um kleinvolumige beziehungsweise miniaturisierte Spulen mit einem zumindest geringen Durchmesser, welche daher auch als Mikrospulen charakterisiert werden können. Die zur Vermittlung des gewünschten Feedbacks an den Benutzer erforderliche Wechselwirkung zwischen dem Eingabemittel beziehungsweise dessen Magnetfeld und der Interaktionsanordnung wird bei der durch ein Spulenarray realisierten Ausbildungsform erfindungsgemäß dadurch erreicht, dass jeweils mindestens eine der sich beim Entlangbewegen des Eingabemittels an der berührungsempfindlichen Displayoberfläche im Umfeld des Eingabemittels befindenden Spulen von einem Strom durchflossen wird.

Für die Anordnung der elektrischen Spulen bei der zuletzt beschriebenen Ausbildungsform der Interaktionsanordnung sind grundsätzlich mehrere Möglichkeiten gegeben. In jedem Falle sind bei einem derartigen Array die elektrischen Spulen in mehreren Zeilen und Spalten unterhalb der berührungsempfindlichen Oberfläche des zu der Benutzerschnittstelle gehörenden Displays angeordnet. Sie haben zudem vorzugsweise in den einzelnen Zeilen zueinander gleiche Abstände und sind darüber hinaus auch in den Spalten mit jeweils gleichem Abstand angeordnet, wobei der letztgenannte Abstand, dem Seitenverhältnis des Displays Rechnung tragend, auch verschieden sein kann von dem Abstand der Spulen innerhalb der Zeilen. Trotz innerhalb der Zeilen und innerhalb der Spalten jeweils gleichen Abstandes der Spulen kann es dabei vorteilhaft sein, sowohl die Spulen einander benachbarter Zeilen als auch die Spulen einander benachbarter Spalten in einem Versatz anzuordnen. Die Spulen sind zwar auch hierbei innerhalb der Zeilen jeweils in einem gleichen Spaltenabstand und innerhalb der Spalten des Arrays in einem gleichen Zeilenabstand angeordnet, jedoch sind die Spulen einander benachbarter Zeilen vorzugsweise jeweils um den halben Spaltenabstand und die Spulen einander benachbarter Spalten jeweils um den halben Zeilenabstand gegeneinander versetzt angeordnet. Soweit dabei, wie ebenfalls möglich, Spaltenabstand und Zeilenabstand gleich sind, bedeutet dies, dass von einer Spule jeweils gemeinsam mit zwei Spulen einer benachbarten Zeile oder einer benachbarten Spalte die Eckpunkte eines gedachten gleichseitigen Dreiecks ausgebildet werden.

Entsprechend dem Grundprinzip der erfindungsgemäßen Benutzerschnittstelle ist, wie bereits ausgeführt, im Falle der Ausbildung der Interaktionsanordnung durch ein Array elektrischer Spulen jeweils mindestens eine der sich beim Entlangbewegen des Eingabemittels an der berührungsempfindlichen Displayoberfläche im Umfeld des Eingabemittels befindenden Spulen von einem Strom durchflossen. Vorzugsweise ist die Benutzerschnittstelle beziehungsweise deren Interaktionsanordnung jedoch so gestaltet, dass jeweils mehrere der sich im Umfeld des über die berührungsempfindliche Displayoberfläche bewegten Eingabemittels befindenden Spulen von einem Strom durchflossen werden. Während die zwischen dem Magnetfeld des Permanentmagneten des Eingabemittels und einer jeweiligen vom Strom durchflossenen Spule der Interaktionsanordnung hervorgerufene magnetische Wechselwirkung grundsätzlich dazu dient, die vom Benutzer beim Entlangführen des Eingabemittels an der Oberfläche des Display empfundene Reibung zu erhöhen und hierdurch dem Nutzer ein Feedback zu vermitteln, welches dem beim Entlangführen eines Stiftes auf Papier ähnelt, kann durch eine gezielte Bestromung einer Mehrzahl, der sich im Umfeld des Bedienelementes befindenden Spulen eine zusätzliche Führung des Eingabemittels, wie beispielsweise insbesondere eines Stylus, erreicht werden. Hierdurch ist es beispielsweise möglich, den Nutzer gezielt bei der Eingabe einer horizontalen Linie zu unterstützen. Bei der Eingabe eines Textes mithilfe des Eingabemittels kann der Nutzer zudem darin unterstützt werden, sich ohne das Vorhandensein sichtbarer Linien innerhalb einer horizontal verlaufenden Textzeile zu bewegen und dabei außerdem die Buchstaben mit einer sehr gleichmäßigen Schrift, nämlich ohne über eine gedachte Linie hinausgehende Ober- und Unterzüge, zu schreiben. Eine entsprechende Führung des Eingabemittels lässt sich auch durch eine unterschiedliche Bestromung der Spulen des Arrays erreichen, das heißt dadurch, dass die einzelnen Spulen von einem Strom mit zueinander unterschiedlicher Stromstärke und/oder Stromrichtung durchflossen werden. Durch eine Modulation der durch den jeweiligen Spulenstrom erzeugten Felder kann der Effekt einer gezielten Führung des Eingabemittels auf der Oberfläche des Displays gegebenenfalls noch zusätzlich beeinflusst werden. Durch eine hinsichtlich der Stromstärke und/oder der Stromrichtung unterschiedliche Bestromung der Spulen zu unterschiedlichen Zeitpunkten und/oder in Abhängigkeit von Position oder Bewegung des Eingabemittels auf der Displayoberfläche lässt sich das dem Nutzer vermittelte haptische Feedback aufgrund der dadurch unterschiedlichen auf das Eingabemittel wirkenden Abstoßungs - oder Anziehungskräfte auch dynamisch gestalten. So lassen sich Richtungs- und Geschwindigkeits-Änderungen des Eingabemittels berücksichtigen Zum Beispiel könnte man die "Reibung" (also die empfundene Reibung), ähnlich wie bei einer physikalischen Reibung auf Papier, proportional zu Geschwindigkeit verringern. Alternativ könnte man aber auch die Reibung erhöhen, um ein Abrutschen zu vermeiden.

Für die entsprechende Ansteuerung der jeweiligen Spulen beziehungsweise deren Bestromung wird dabei eine Verarbeitungseinheit des zu bedienenden elektronischen Geräts genutzt, welche demgemäß für eine Zusammenarbeit mit der erfindungsgemäßen Benutzerschnittstelle ausgelegt und/oder programmiert ist beziehungsweise die Benutzerschnittstelle durch entsprechende Treiber unterstützt.

Durch das zuletzt beschriebene Prinzip einer gezielten Führung des Eingabemittels (insbesondere eines Stylus) durch geeignete Bestromung der Spulen der Interaktionsanordnung lassen sich unter Einbeziehung der schon vorstehend angedeuteten Möglichkeiten zusammenfassend beispielsweise folgende Anwendungen beziehungsweise Einsatzmöglichkeiten für die erfindungsgemäße Benutzerschnittstelle angeben:
● Führen des Eingabemittels zu Formular- beziehungsweise Eingabefeldern in Masken/Webseiten/Spreadsheets und dergleichen,
● Führen des Eingabemittels zu Raster-Gitterpunkten in (technischen) Zeichnungsanwendungen,
● Führen des Eingabemittels zu den Verknüpfungspunkten für Verbinder bei Grafikobjekten oder zu anderen Manipulationspunkten, zum Beispiel zum Vergrößern,
● adaptives Feedback in Abhängigkeit der Bewegungsaktion mit dem Eingabemittel, zum Beispiel indem man die Trägheit/empfundene Reibung erhöht mit zunehmender Größe (eines Objektes), Slider-Position und dergleichen,
● haptische Skalenticks: Bedient man mit dem Eingabemittel einen virtuellen Skalen-Regler (Schiebe-Regler oder Drehregler) so kann man die Minor- und Major-Ticks durch ein entsprechendes Feedback für den Nutzer haptisch erfahrbar machen,
● (schwache) Fangbereiche für die Fenster-Rahmen bzw. Bedienfelder,
● Fangbereiche bei Menüs beziehungsweise Menü-Einträgen,
● Abstoßungslinien und "Auffangbecken/bereiche" bei unterteilten Menüs beziehungsweise kaskadierten Menüs, um ein versehentliches Herausrutschen des Eingabemittels aus dem Untermenü (und gegebenenfalls nachfolgendes "Zusammenklappen" des Menüs) zu vermeiden,
● Schreiben auf Linien/Zeilen: Mithilfe von Abstoßungslinien und "Auffangbecken/-bereichen" ließe sich die Bedienoberfläche eines Tablett-PC, also dessen berührungsempfindliches Display gewissermaßen virtuell linieren. Hierdurch würde das Schreiben geführt, so dass die Schreibamplituden nicht zu groß würden, die horizontale Orientierung besser beibehalten und die Textzeilen blieben hiermit besser lesbar und gegebenenfalls für eine nachfolgende Schrifterkennung besser umwandelbar. Diese Führung wäre ähnlich wie in einem linierten Notizbuch, nur nicht rein optisch sondern auch (stark) haptisch vermittelt.

Eine gewisse Führung des Eingabemittels ist auch bei einer rein passiven Ausbildung der Interaktionsanordnung in Form der erstgenannten Variante mit einer ferromagnetischen Schicht möglich - wenngleich in deutlich eingeschränkter Form. So ist es möglich, eine entsprechende Interaktionsanordnung in geeigneter Weise zu strukturieren. Hierbei können beispielsweise Ausnehmungen oder Bereiche größerer Materialstärke in der ferromagnetischen Schicht ausgebildet und dadurch eine lokal unterschiedlich starke magnetische Wechselwirkung mit dem Eingabemittel erreicht werden. Unabhängig davon und insoweit nicht zwingend mit dem Ziel einer gerichteten Führung des Eingabemittels durch eine entsprechende Strukturierung der Interaktionsanordnung, können aber in der ferromagnetischen Schicht Ausnehmungen beziehungsweise Durchbrüche auch mit Blick auf eine Gewichtsreduktion und/oder Materialersparnis ausgebildet werden.

Durch das haptische Feedback bekommt eine zweidimensionale, auf einem berührungsempfindlichen Display visualisierte grafische Benutzeroberfläche gewissermaßen eine dritte, haptische Dimension, welche die Möglichkeiten der Wahrnehmung und der Interaktion stark erweitert. Interessant sind die letztgenannten weitergehenden Einsatzmöglichkeiten der Benutzerschnittstelle gerade deshalb, weil sie Nutzungsmöglichkeiten eröffnen, die ohne haptisches Feedback kaum oder gar nicht gegeben sind. So ist es dem Benutzer möglich, nachdem initial ein Mal die optisch richtige Position des Bedienelements auf der berührungsempfindlichen Displayoberfläche erfasst wurde, Eingaben gleichsam blind, nämlich rein aufgrund der haptischen Rückkopplung vorzunehmen. Es dabei im Grunde nicht mehr notwendig, den Blick bei der Eingabe ständig auf dem Bildschirm beziehungsweise dem Display zu lassen. Der Benutzer kann ähnlich wie mit Papier und Stift arbeiten (Schreiben beziehungsweise Skizzieren), wobei er üblicherweise auch nicht ständig auf das Blatt schaut. Auch virtuelle Regelelemente, deren physikalische Originale sich blind, rein mit den Händen, bedienen lassen, können hiermit nutzerfreundlicher und effizienter bedient werden. Interessant ist die Technik gerade auch in Kombination mit einer Sprachausgabe für die barrierefreie Nutzung von Tablett-PCs durch sehbehinderte oder gar blinde Menschen, da sich mit ihr Grafiken, Menüs, Eingabefelder und dergleichen haptisch erfahrbar machen lassen.

Bezüglich der grundsätzlichen Gestaltung der erfindungsgemäßen Benutzerschnittstelle ist es - wie ebenfalls bereits ausgeführt - nicht zwingend vorgesehen, dass diese selbst auch der Positionsbestimmung des mit dem berührungsempfindlichen Display in Kontakt gebrachten oder an ihm entlangbewegten Eingabemittels dient. Im Vordergrund steht vielmehr der Aspekt, dem Nutzer der Eingabeeinrichtung ein Feedback zu vermitteln, welches dem beim Schreiben auf Papier vergleichbar ist und ihm gegebenenfalls ein darüber hinausgehendes, bei der Eingabe unterstützendes Feedback zu geben. Demgemäß kann es vorgesehen sein, dass es sich bei dem berührungsempfindlichen Display um ein Display handelt, welches zumindest hinsichtlich der Positionsbestimmung eines darauf positionierten Stylus beziehungsweise eines damit vergleichbaren Eingabemittels in der Art eines bereits aus dem Stand der Technik bekannten, beispielsweise nach dem Prinzip der kapazitiven Eingabe arbeitenden Touchscreens, gestaltet ist. Im Hinblick auf das gewünschte Feedback ist dabei ein entsprechendes berührungsempfindliches Display im Sinne der Erfindung im Grunde lediglich durch eine entsprechende Interaktionsanordnung, nämlich durch ein Spulenarray oder durch eine ferromagnetische Schicht ergänzt. Bei der Verwendung eines Spulenarrays als Interaktionsanordnung ist es aber auch möglich, die insoweit unterhalb der Displayoberfläche angeordneten Spulen auf der Grundlage der an ihnen durch das Magnetfeld des Eingabemittels hervorgerufenen Induktionsspannung zur Positionsbestimmung beziehungsweise zur Lokalisierung und/oder Identifizierung des Eingabemittels zu nutzen. Dabei wird die Positionsbestimmung/Lokalisierung auf der Betriebssystemebene ermöglicht, wobei keine (wie sonst bisweilen bei Pads zu beobachten) Irritationen durch versehentliche Berührungen der berührungsempfindlichen Displayoberfläche mit den Fingern entstehen.

Gemäß einer möglichen Weiterbildung der zuvor erläuterten Ausbildungsform mit der Möglichkeit einer Positionsbestimmung des Eingabemittels mit Hilfe der Spulen werden dabei die zur Positionsbestimmung nutzbaren Spulen unter anderem zur Verringerung des Energieverbrauchs, gegebenenfalls aber auch für eine effiziente Doppelnutzung für die Erzeugung des Feedbacks einerseits und für die Positionsbestimmung des Eingabemittels andererseits, im Wechsel bestromt und zur Ermittlung der an ihnen hervorgerufenen Induktionsspannung abgetastet. Im Hinblick auf die Genauigkeit der Positionsbestimmung für das Eingabemittel und die auch dabei genutzte Wechselwirkung seines Permanentmagneten sei an dieser Stelle darauf hingewiesen, dass heute sehr starke Permanentmagnete mithilfe von seltenen Erden produziert werden können, die trotz kleiner Abmessungen sehr große Magnetfelder erzeugen. Daher ist es möglich, auch mit kostengünstigen Spulen die Feldkomponenten des Permanentmagneten beziehungsweise die durch diese in den Spulen des Interaktionsmittels erzeugte Induktionsspannung zu detektieren und lokal differenziert auszuwerten. Auch die Positionsbestimmung des Eingabemittels erfolgt dabei unter Einbeziehung einer entsprechenden die Induktionsspannungen der einzelnen Spulen auswertenden und insoweit dafür hergerichteten beziehungsweise programmtechnisch unterstützten Verarbeitungseinheit des elektronischen Geräts, wie eines Tablett-PCs oder Smartphones.

Unterschiedliche Ausbildungsformen der Erfindung sind auch im Hinblick auf die konkrete Ausbildung des Eingabemittels vorgesehen. Entsprechend einer ersten dieser Ausbildungsformen handelt es sich bei dem Eingabemittel, wie schon mehrfach angesprochen, um einen Stylus, bei welchem im Bereich mindestens eines seiner axialen Enden ein Permanentmagnet angeordnet ist. Vorzugsweise treten die magnetischen Feldlinien des an dem axialen Ende des Stylus angeordneten Permanentmagneten im Wesentlichen parallel zur axialen Längsrichtung des Stylus aus oder ein. Das heißt, der Permanentmagnet ist innerhalb des Stylus so angeordnet, dass dessen Nordpol oder Südpol dem entsprechenden axialen Ende des Stylus zugewandt ist. Hierbei kann es entsprechend einer möglichen Weiterbildung dieser Ausbildungsform vorgesehen sein, dass der Permanentmagnet mittels eines zu diesem Zweck an dem Stylus angeordneten Bedienelements, wie einer Art Schalter oder Knopf, durch dafür an oder in dem Stylus vorgesehene mechanische Mittel zum Wechsel der Polarität seines auf das Interaktionsmittel wirkenden Magnetfelds bezüglich seiner Ausrichtung innerhalb des Stylus drehbar ist. Eine solche Ausbildungsform des Eingabemittels beziehungsweise Stylus ist insbesondere sinnvoll im Zusammenhang mit einer Ausbildung des an oder in dem berührungsempfindlichen Display angeordneten Interaktionsmittels in Form eines Arrays elektrischer Spulen. Sofern nämlich zumindest bei einem Teil dieser Spulen die an ihnen beim Eintreten einer magnetischen Wechselwirkung mit dem Magnetfeld des Permanentmagneten des Stylus hervorgerufene Induktionsspannung mittels der Verarbeitungseinheit des mit der Eingabeeinrichtung ausgestatteten elektronischen Geräts zur Bestimmung der jeweiligen Position des Eingabemittels auf der berührungsempfindlichen Oberfläche des Display ausgewertet wird, kann der Wechsel der Polarität des Permanentmagneten zum Beispiel dahingehend ausgewertet werden, dass mithilfe des über die berührungsempfindliche Oberfläche des Displays geführten Eingabemittels entweder eine Linie gezeichnet oder eine Linie gelöscht wird. Entsprechendes gilt für eine ebenfalls vorgesehene Ausbildungsform, bei welcher in dem Stylus an jedem seiner axialen Enden ein Permanentmagnet angeordnet ist, wobei die magnetischen Feldlinien des einen Permanentmagneten am betreffenden Ende des Stylus aus diesem heraustreten und die des anderen Permanentmagneten am entgegengesetzten Ende des Stylus in diesen eintreten. Auch diese Konfiguration lässt sich durch Drehen des Stylus vom Nutzer beispielsweise für das Zeichnen und das Löschen einer Linie verwenden.

Der Stylus kann zudem so ausgebildet sein, dass ein axiales Ende des Stylus, in dessen Bereich ein Permanentmagnet angeordnet ist, mit einer Spitze aus einem Elastomer oder aus einem Kunststoff ausgestattet ist, innerhalb welcher der Permanentmagnet angeordnet ist. Hierdurch ist der Permanentmagnet durch den beim Aufsetzen des Eingabemittels auf die berührungsempfindliche Oberfläche ausgeübten Druck innerhalb der Spitze des Stylus axial beweglich. Dies hat zur Folge, dass sich der Permanentmagnet bei auf die berührungsempfindliche Oberfläche aufgesetztem Stylus in Abhängigkeit des dabei ausgeübten Drucks mehr oder weniger stark von der berührungsempfindlichen Oberfläche entfernt. Im Ergebnis führt dies wiederum dazu, dass die in den Spulen unterhalb der berührungsempfindlichen Oberfläche aufgrund der magnetischen Wechselwirkung hervorgerufenen Induktionsspannung unterschiedlich hoch ist, so dass sich der jeweils aufgewendete Druck bestimmen lässt und mithilfe des Eingabemittels jeweils unterschiedliche Steuerungsvorgänge an dem elektronischen Gerät ausgelöst werden können.

Entsprechend einer weiteren möglichen Ausbildungsform des Eingabemittels handelt es sich bei diesem um einen über den Finger eines Nutzers zu ziehenden Fingerling mit einem im Bereich der Fingerkuppe angeordneten Permanentmagneten. Dem Nutzer sind somit Eingaben dadurch ermöglicht, dass er mit dem vom Fingerling überzogenen Finger die berührungsempfindliche Oberfläche des Displays berührt oder sich auf dieser entlangbewegt. Bei einer damit vergleichbaren Ausbildungsform ist das Eingabemittel als ein vom Nutzer zu tragender Fingerhandschuh ausgebildet. Hierbei kann in mehreren Fingern des betreffenden Fingerhandschuhs je ein Permanentmagnet angeordnet sein. Im letztgenannten Fall sind vorzugsweise in den mit einem Permanentmagneten ausgestatteten Fingern des Handschuhs Mittel vorgesehen, durch welche die Permanentmagnete der einzelnen Finger gegeneinander magnetisch abgeschirmt sind. Zudem kann es vorgesehen sein, dass der vorzugsweise aus einem Gewebe bestehende Handschuh die Hand eines Benutzers nur teilweise umhüllt, indem zum Beispiel nur die Teile der Hand von Stoff umhüllt sind, welche beim Schreiben an der aus Kunststoff oder Glas bestehenden berührungsempfindlichen Oberfläche des Displays entlanggleiten. Denkbar ist es auch, dass die vom Display abgewandte Seite der Hand zumindest nicht ganz vom Stoff bedeckt, sondern stark perforiert ist oder/und der Stoff die proximalen Fingerglieder nicht bedeckt. Hierdurch würde ein unnötiger vom Benutzer sicherlich als unangenehm empfundener Hitzestau vermieden. Im Hinblick auf den letztgenannten Aspekt sollte darüber hinaus ein möglichst dünner Stoff für die Ausbildung des Handschuhs verwendet werden, in dessen Fingern jedoch eine gute Fixierung des oder der Permanentmagneten gewährleistet sein muss. In Betracht kämen die Verwendung von Viskose oder mikrofaserähnlicher Materialen. Letztere könnten dabei beim Gebrauch durch einen Benutzer, das heißt beim Entlanggleiten auf dem berührungsempfindlichen Display, gleichzeitig einen gewissen Reinigungseffekt für dessen Oberfläche haben.

Damit kein zu starker Gleiteffekt auftritt, kann es auch sinnvoll sein den Stoff des Handschuhs an der Hauptauflagefläche, das heißt von der Handkante bis zum Handgelenk etwas grober zu perforieren (oder eine ähnliche Wirkung per Strickverfahren zu erzeugen). Neben dem Stoff liegt dann auch etwas Haut der Hand eines Benutzers auf der Oberfläche auf, allerdings gerade nur so viel, dass die Hand weder an der Glas- oder Kunststoffoberfläche klebt, noch wegrutscht. Diese Lösung hat den großen Vorteil, dass die Haut durch den teilweisen direkten Kontakt noch eine (gewohnte) sensorische Rückmeldung liefert, die bei einem nicht perforierten Handschuh verloren ginge. Unabhängig von den vorgenannten Merkmalen und der Stoffwahl für den Handschuh könnten zudem spezielle Handschuhe für Rechts- und für Linkshänder realisiert werden.

Nachfolgend seien zusammenfassend nochmals einige Vorteile der Erfindung und ihrer Ausprägungen beziehungsweise deren technisches Potenzial verdeutlichende Aspekte aufgeführt, welche teilweise auch schon bei der Darstellungen zu den Vorzügen unterschiedlicher Anwendungen und Einsatzmöglichkeiten für Ausbildungsformen zur gerichteten Führung des Eingabemittels auf der Displayoberfläche angesprochen wurden:
● Das mittels der erfindungsgemäßen Benutzerschnittstelle erreichte haptische Feedback verleiht den auf einem Display visualisierten Elementen zur Steuerung eines elektronischen Gerätes durch Benutzereingaben gewissermaßen einer dritte, nämlich haptische Dimension, welche ganz neue Möglichkeiten der effizienteren Interaktion eröffnet,
● die Benutzerschnittstelle ermöglicht eine haptische Rückkopplung, die dem normalen Schreibgefühl vergleichsweise nahe kommt,
● die Benutzerschnittstelle ermöglicht ein feineres Arbeiten mit dem Eingabemittel, beispielsweise einem Stylus, da sich durch ein erhöhtes "Anziehungs-Feedback" das Wegrutschen mit dem Eingabemittel (Stylus/Stift) vermeiden lässt,
● der einfache Aufbau eines mit einem Permanentmagneten ausgestatteten Stylus erlaubt niedrige Herstellungskosten und verursacht bei Verlust des Stylus keine hohen Kosten beim Benutzer, wobei zudem durch den Einsatz eines Permanentmagneten keine Batterien/Akkus notwendig sind,
● es ist hinsichtlich des Eingabemittels eine Unterscheidung zwischen Fingern und Stylus und damit auch eine Unterscheidung zwischen Schrifteingabe und versehentlichem Berühren oder zusätzlichen Aktionen (Multitouch mit Stylus-Unterstützung) möglich,
● es besteht die Möglichkeit Druckstufen zu bestimmen,
● im Falle einer Ausbildung des Interaktionsmittels in Form eines Spulenarrays besteht die Möglichkeit den Neigungswinkel des Eingabemittels auf der Grundlage daraus resultierender unterschiedlicher Induktionsspannungen an den Spulen zu bestimmen
● bei einer Ausbildung der Benutzerschnittstelle auch zur Positionsbestimmung des Eingabemittels und Verwendung eines Stylus ist eine gegenüber einer Fingerbedienung bessere Lokalisierungsgenauigkeit für den Stylus zu erwarten, was insbesondere für hochauflösende Touch-Displays interessant sein könnte,
● die Spulen eines in Form eines Spulenarrays ausgebildeten Interaktionsmittels müssen nicht auf der optischen Seite des berührungsempfindlichen Displays angebracht werden, so dass der Produktionsprozess einfacher beziehungsweise modularer ist und die optischen Eigenschaften des Displays sich nicht verschlechtern.

Aufgrund des starken Magnetfeldes des in dem Eingabemittel verwendeten Permanentmagneten beziehungsweise der Permanentmagnete ist es zwar nicht auszuschließen, dass die sonstige Displaytechnik, speziell die Elektronik, modifiziert werden muss oder Maßnahmen zur magnetischen Abschirmung einzelner Element getroffen werden müssen. Jedoch sollte sich dies mit einem vertretbaren Aufwand bewerkstelligen lassen. Beispielsweise ist es denkbar entsprechende Teile des Displays beziehungsweise des mit ihm ausgestatteten elektronischen Gerätes mittels Elementen aus Mu-Metallen (µ-Metall, englisch Mu-metal = weichmagnetisches Metall hoher Permeabilität) abzuschirmen oder gar zu kapseln.

Mit Bezug auf die Zeichnungen soll nachfolgend nochmals auf einige Aspekte der Erfindung eingegangen werden. Hierbei zeigen
- Fig. 1:: Eine schematische Darstellung eines Ausschnitts einer möglichen Ausbildungsform eines mit der erfindungsgemäßen Interaktionsanordnung ausgestatteten Displays,
- Fig. 2:: Die Interaktionsanordnung gemäß Fig. 1 unter Weglassung der transparenten, berührungsempfindlichen Oberfläche in Interaktion mit dem Eingabemittel.

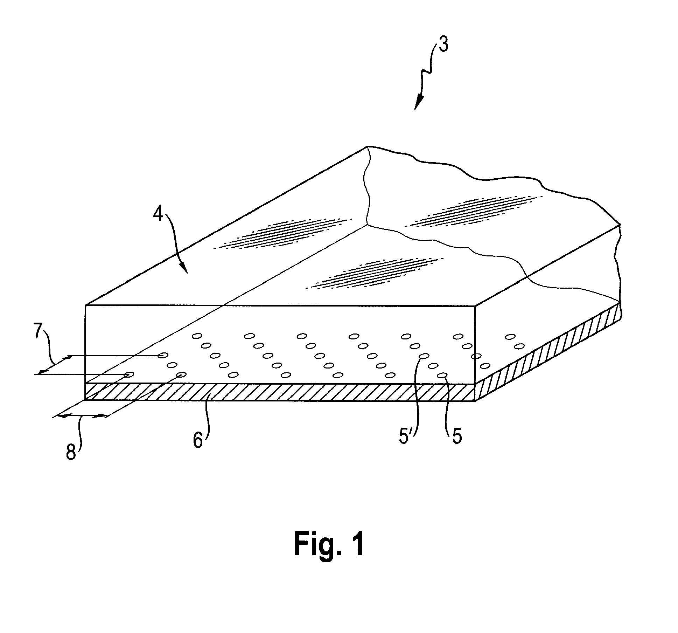

In der schematischen Darstellung der Fig. 1 ist ein Teil, nämlich ein Eckbereich, eines Displays 3 eines mit der erfindungsgemäßen Benutzerschnittstelle zu betreibenden elektronischen Geräts dargestellt. Das entsprechende Display 3 weist eine transparente, berührungsempfindliche Oberfläche 4 auf. Unterhalb dieser Oberfläche 4, in das Display 3 integriert, ist die entsprechend der Erfindung vorgesehene Interaktionsanordnung angeordnet. Diese ist in dem gezeigten Beispiel durch ein Array auf einem Träger 6 angeordneter elektrischer Spulen 5, 5' ausgebildet. Die aufgrund ihrer geringen Abmessungen auch als Mikrospulen zu bezeichnenden Spulen 5, 5' sind, wie aus der Abbildung ersichtlich, in mehreren Zeilen und Spalten angeordnet, wobei zwischen den Spulen 5, 5' einer Zeile und somit zwischen den Spalten des Arrays ein gleicher Spaltenabstand 8 besteht. Entsprechendes gilt für den Abstand der Spulen 5, 5' innerhalb einer Spalte, welche demgemäß jeweils einen gleichen Zeilenabstand 7 aufweisen. Bei der beispielhaft gezeigten, hier nur schematisch angedeuteten Ausbildungsform weisen die Spulen 5, 5' einander benachbarter Zeilen zueinander einen Versatz auf, welcher dem halben Spaltenabstand 8 entspricht. Ebenso sind die Spulen 5, 5' einander benachbarter Spalten in einem dem halben Zeilenabstand 7 entsprechenden Versatz angeordnet.

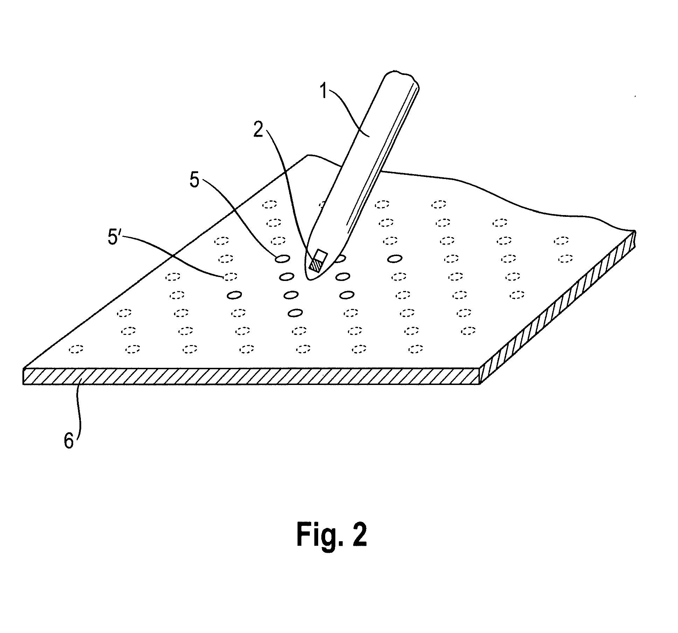

Bei dem zweiten wesentlichen Element der Benutzerschnittstelle handelt es sich um das von einem Benutzer von Hand zu bewegende und zum Zwecke von Eingaben mit der berührungsempfindlichen Oberfläche 4 des Displays 3 in Kontakt zu bringende oder/und an dieser Oberfläche 4 entlangzuführende Eingabemittel 1. In der Fig. 2 ist beispielhaft ein Eingabemittel 1 in Interaktion mit dem das Interaktionsmittel in Form des Arrays aus Spulen 5, 5' aufweisenden berührungsempfindlichen Display 3 gemäß Fig. 1 gezeigt. Bei der Darstellung des Displays ist zur besseren Veranschaulichung dessen berührungsempfindliche Oberfläche 4 (siehe hierzu Fig. 1) nicht gezeichnet worden. Das Eingabemittel 1 ist bei dem dargestellten Beispiel in Form eines Stylus ausgebildet, von welchem vorliegend nur die Spitze angedeutet ist. In dieser Spitze ist der Permanentmagnet 2 angeordnet, dessen Magnetfeld bei durch den Benutzer erfolgenden Eingaben in eine magnetische Wechselwirkung mit der Interaktionsanordnung, also den in einem Array angeordneten Spulen 5, 5', gebracht wird. Innerhalb des Arrays sind die Spulen 5, 5' der Interaktionsanordnung so ausgerichtet, das ihre von den Windungen der Spule 5, 5' umgebene Längsachse orthogonal zur Darstellungsebene angeordnet ist. Zumindest eine der sich jeweils im Umfeld der aktuellen Position des in Interaktion mit der Interaktionsanordnung gebrachten Eingabemittels 1 befindenden Spulen 5, 5' ist gesteuert durch eine nicht gezeigte Verarbeitungseinheit des mit dem berührungsempfindlichen Display 3 ausgestatteten elektronischen Gerätes von einem Strom durchflossen. Hierdurch wird von dieser Spule 5, 5' (oder diesen von Strom durchflossenen Spulen 5, 5') ein Magnetfeld aufgebaut, welches in Interaktion mit dem Magnetfeld des Permanentmagneten 2 des Eingabemittels 1 beziehungsweise des Stylus tritt.

Um dem Benutzer des Stylus bei dessen Entlangführen an der berührungsempfindlichen Oberfläche 4 (siehe Fig. 1) des Displays 3 ein Feedback zu vermitteln, welches an die Wahrnehmungen beim Schreiben auf Papier angenähert ist, wird durch die Interaktion des Magnetfeldes der stromdurchflossenen Spule oder Spulen 5, 5' mit dem Magnetfeld des Permanentmagneten 2 beim Bewegen des Stylus über die Oberfläche 4 ein erhöhter Reibungswiderstand gewissermaßen simuliert. Hierfür werden die Spule beziehungsweise Spulen 5, 5' im Umfeld des mit dem Permanentmagneten 2 ausgestatteten Stylus von einem Strom durchflossen, dessen Polarität so gewählt ist, dass der Permanentmagnet 2 des Stylus durch das Magnetfeld der entsprechenden Spule beziehungsweise Spulen 5, 5' leicht angezogen wird. In der Zeichnung sind die von einem Strom durchflossenen Spulen 5, 5' im Gegensatz zu den anderen Spulen 5, 5' jeweils mit einer durchgezogenen Kreisumfangslinie dargestellt. Um jeweils diejenigen Spulen 5, 5', die sich im Umfeld der jeweils aktuellen Position des Stylus befinden, gezielt bestromen zu können, ist es selbstverständlich erforderlich, diese Position des Stylus festzustellen. Dabei kann die jeweils aktuelle Position des Stylus beispielsweise unter Nutzung bekannter Technologien kapazitiver Displays ermittelt werden. Darüber hinaus ist es aber möglich, auch hierfür die Spulen 5, 5' der Interaktionsanordnung und die an diesen durch den sich über sie hinwegbewegenden Permanentmagneten 2 des Eingabemittels induzierte Spannung zu nutzen. Vorzugsweise werden dabei die Spulen 5, 5', welche sich im Umfeld des Stylus und seines Permanentmagneten 2 befinden, im Wechsel zwischen einem Betriebszustand zur Ermittlung der Stylusposition einerseits und einem Betriebszustand zur Erzeugung des an das Schreiben auf Papier erinnernden Feedbacks andererseits umgeschaltet. Die betreffenden Spulen 5, 5' werden demnach im schnellen Wechsel bestromt und zur Auswertung der an ihnen induzierten Spannung abgetastet. Neben dem "normalen" Feedback, welches dem Benutzer ein ihm vom Schreiben auf Papier bekanntes Gefühl vermittelt, ist es durch eine gezielte Bestromung der Spulen 5, 5' der Interaktionsanordnung auch möglich, den Stylus beispielsweise zur Unterstützung des Zeichnens einer horizontalen Linie zu führen. Dies kann beispielsweise dadurch realisiert werden, dass die Zeile des Spulenarrays, entlang welcher der Stylus (Eingabemittel 1) bewegt wird, und gegebenenfalls die Spulen 5, 5' der beiden unmittelbar daran angrenzenden Zeilen von einem schwächeren Strom und die Spulen 5, 5' einer oder einiger oberhalb und unterhalb an diesen Zeilenbereich angrenzender Zeilen von einem stärkeren Strom durchflossen werden. Die letztgenannten Arrayzeilen bilden dabei gewissermaßen eine Art Begrenzung, innerhalb welcher das Eingabemittel respektive der Stylus "eingefangen" ist.

In der zur Veranschaulichung dienenden schematischen Darstellung ist der Permanentmagnet 2 in der Spitze des mit dem berührungsempfindlichen Display 3 in Kontakt gebrachten Eingabemittels 1 beziehungsweise Stylus so angeordnet, dass einer seiner Pole (angenommen sei der Nordpol) der berührungsempfindlichen Oberfläche 4 des Displays 3 zugewandt ist. Darüber hinaus kann (hier nicht dargestellt) an dem anderen Ende des Stylus ein weiterer Permanentmagnet angeordnet sein, welcher vorzugsweise so ausgerichtet ist, dass sein Südpol in Richtung des betreffenden Endes des Stylus zeigt. Sofern der Benutzer den Stylus umdreht, so dass von ihm der letztgenannte Permanentmagnet 2 des Stylus mit der berührungsempfindlichen Oberfläche 4 in Kontakt gebracht wird, weist die Polarität der beim Entlangbewegen des Stylus an der berührungsempfindlichen Oberfläche 4 in den darunter befindlichen Spulen 5, 5' induzierten Spannung eine gegenüber der in der Darstellung gezeigten Situation umgekehrte Polarität auf. Dies kann durch eine Verarbeitungseinheit des mit der Benutzerschnittstelle betriebenen elektronischen Geräts dahingehend ausgewertet werden, dass mit der einen Spitze des Stylus beim Bewegen entlang des Displays 3 Linien gezeichnet werden, wohingegen diese durch Umdrehen des Stylus mit der anderen Spitze "ausradiert" werden können.

## Patentansprüche

1. Benutzerschnittstelle für ein elektronisches Gerät mit einem eine berührungsempfindliche Oberfläche (4) aufweisenden Display (3) zur Aus- und Eingabe und mit einem durch einen Benutzer für Eingaben in das Gerät von Hand mit der berührungsempfindlichen Oberfläche (4) in Kontakt zu bringen oder/und an dieser entlangzubewegenden Eingabemittel (1), **dadurch gekennzeichnet, dass** das Eingabemittel (1) mindestens einen Permanentmagneten (2) aufweist und an oder in dem Display (3) unterhalb der berührungsempfindlichen Oberfläche (4) eine sich parallel zu der berührungsempfindlichen Oberfläche (4), über deren berührungsempfindlichen Bereich erstreckende Interaktionsanordnung ausgebildet ist, mit welcher das Magnetfeld des mindestens einen Permanentmagneten (2) des Eingabemittels (1) bei einer mittels diesem erfolgenden Eingabe derart in eine magnetische Wechselwirkung tritt, dass die beim Entlangführen des Eingabemittels (1) an der berührungsempfindlichen Oberfläche (4) vom Benutzer des Eingabemittels (1) empfundene Reibung zumindest partiell höher ist als die von dem Benutzer beim Entlangführen desselben Eingabemittels (1) an einer Oberfläche eines nicht mit dem vorgenannten Interaktionsmittel ausgestatteten Displays empfundene Reibung.

2. Benutzerschnittstelle nach Anspruch 1, **dadurch gekennzeichnet, dass** die Interaktionsanordnung durch eine ferromagnetische Schicht gebildet ist.

3. Benutzerschnittstelle nach Anspruch 2, **dadurch gekennzeichnet, dass** die ferromagnetische Schicht strukturiert ist.

4. Benutzerschnittstelle nach Anspruch 1, **dadurch gekennzeichnet, dass** die Interaktionsanordnung durch ein Array zueinander parallel angeordneter elektrischer Spulen (5, 5') gebildet ist, von denen jeweils mindestens eine der sich bei einem Entlangbewegen des Eingabemittels (1) an der berührungsempfindlichen Oberfläche (4) des Displays (3) im Umfeld des Eingabemittels (1) befindenden Spulen (5, 5') von einem Strom durchflossen wird.

5. Benutzerschnittstelle nach Anspruch 4, **dadurch gekennzeichnet, dass** die Spulen innerhalb der Zeilen des Arrays jeweils in einem gleichen Spaltenabstand (8) und innerhalb der Spalten des Arrays jeweils in einem gleichen Zeilenabstand (7) angeordnet sind, wobei sie jeweils in einander benachbarten Zeilen um den halben Spaltenabstand (8) und innerhalb benachbarter Spalten jeweils um den halben Zeilenabstand (7) gegeneinander versetzt angeordnet sind.

6. Benutzerschnittstelle nach Anspruch 4 oder 5, **dadurch gekennzeichnet, dass** bei einem Entlangführen des Eingabemittels (1) an der berührungsempfindlichen Oberfläche (4) des Displays (3) mehrere der Spulen (5, 5') der Interaktionsanordnung von einem Strom durchflossen sind.

7. Benutzerschnittstelle nach Anspruch 6, **dadurch gekennzeichnet, dass** einzelne der von einem Strom durchflossenen Spulen (5, 5') mit einer gegenüber anderen vom Strom durchflossenen Spulen (5, 5') mit abweichender Stromstärke und/oder Stromrichtung bestromt werden.

8. Benutzerschnittstelle nach einem der Ansprüche 4 bis 7, **dadurch gekennzeichnet, dass** zumindest bei einem Teil der Spulen (5, 5') die an ihnen beim Eintreten einer magnetischen Wechselwirkung mit dem Magnetfeld des mindestens einen Permanentmagneten (2) des Eingabemittels (1) hervorgerufene Induktionsspannung mittels der Verarbeitungseinheit des Gerätes zur Positionsbestimmung, nämlich zur Bestimmung der jeweiligen Position des Eingabemittels (1), auf der berührungsempfindlichen Oberfläche (4) des Displays (3) ausgewertet wird.

9. Benutzerschnittstelle nach Anspruch 8, **dadurch gekennzeichnet, dass** die zur Positionsbestimmung nutzbaren Spulen (5, 5') des Interaktionsmittels im Wechsel bestromt und zur Ermittlung der an ihnen hervorgerufenen Induktionsspannung abgetastet werden.

10. Benutzerschnittstelle nach einem der Ansprüche 1 bis 9, **dadurch gekennzeichnet, dass** das Eingabemittel (1) als ein Stylus ausgebildet ist, bei welchem im Bereich mindestens eines seiner axialen Enden ein Permanentmagnet (2) angeordnet ist, dessen magnetische Feldlinien im Wesentlichen parallel zur axialer Längsrichtung des Stylus aus diesem austreten oder in diesen eintreten.

11. Benutzerschnittstelle nach einem der Ansprüche 4 bis 9, **dadurch gekennzeichnet, dass** das Eingabemittel (1) als ein Stylus ausgebildet ist, bei welchem im Bereich mindestens eines seiner axialen Enden ein Permanentmagnet (2) angeordnet ist, dessen axiale Ausrichtung innerhalb des Stylus mittels eines daran angeordneten Betätigungsmittels zum Wechsel der Polarität seines mit der Interaktionsanordnung interagierenden Magnetfeldes veränderlich ist, wobei die Feldlinien des Magnetfeldes jeweils im Wesentlichen parallel zur axialer Längsrichtung des Stylus aus diesem austreten oder in diesen eintreten.

12. Benutzerschnittstelle nach einem der Ansprüche 4 bis 9, **dadurch gekennzeichnet, dass** das Eingabemittel (1) als ein Stylus ausgebildet ist, bei dem eines der axialen Enden mit einer Spitze aus einem Elastomer oder Kunststoff ausgestattet ist, innerhalb welcher der Permanentmagnet (2) angeordnet ist, welcher durch den beim Aufsetzen des Eingabemittels (1) auf die berührungsempfindliche Oberfläche (4) ausgeübten Druck innerhalb der Spitze axialbeweglich ist.

13. Benutzerschnittstelle nach einem der Ansprüche 4 bis 9, **dadurch gekennzeichnet, dass** das Eingabemittel (1) als ein Stylus ausgebildet ist und an beiden axialen Enden des Stylus jeweils ein Permanentmagnet (2) angeordnet ist, wobei die magnetischen Feldlinien eines Permanentmagneten (2) aus dem Stylus im Wesentlichen parallel zur axialen Längsrichtung des Stylus austreten und die magnetischen Feldlinien des anderen Permanentmagneten (2) in den Stylus im Wesentlichen parallel zur axialer Längsrichtung des Stylus eintreten.

14. Benutzerschnittstelle nach einem der Ansprüche 1 bis 9, **dadurch gekennzeichnet, dass** das Eingabemittel (1) als ein über den Finger eines Nutzers zu ziehender Fingerling mit einem im Bereich der Fingerkuppe angeordneten Permanentmagneten (2) ausgebildet ist.

15. Benutzerschnittstelle nach einem der Ansprüche 1 bis 9, **dadurch gekennzeichnet, dass** das Eingabemittel (1) als ein von einem Nutzer zu tragender Fingerhandschuh ausgebildet ist, bei dem zumindest an einem der Finger im Bereich der Fingerkuppe ein Permanentmagnet (2) angeordnet ist.

16. Benutzerschnittstelle nach Anspruch 15, **dadurch gekennzeichnet, dass** in mehreren Fingern des Fingerhandschuhs je ein Permanentmagnet (2) angeordnet ist, wobei die in den einzelnen Fingern angeordneten Permanentmagnete (2) gegeneinander magnetisch abgeschirmt sind.
